# EUROPEAN PATENT APPLICATION

(11) **EP 4 793 950 A2**
(43) Date of publication of application: **19.08.2026**
(21) Application number: 26190375.1
(22) Date of filing: 29.07.2024
(51) Int. Cl.: G11C 7/10

(54) **STORAGE DEVICE AND METHOD FOR DATA-ANALYTICS ACCELERATION**

(30) Priority: 09.08.2023 US 202363531708 P; 04.12.2023 US 202318528602
(62) Document number(s) of the earlier application(s) in accordance with Art. 76 EPC: 24191451.4 / 4 506 943
(71) Applicant: SAMSUNG ELECTRONICS CO., LTD., Yeongtong-gu Suwon-si, Gyeonggi-do 16677 (KR)
(72) Inventor: WASEF, Michael, San Jose, CA, 95134 (US); LUU, Brian, San Jose, CA, 95134 (US); AU, Edmund, San Jose, CA, 95134 (US); CHANG, Andrew, San Jose, CA, 95134 (US)
(74) Representative: Kuhnen & Wacker Patent- und Rechtsanwaltsbüro PartG mbB

(57) **Abstract**

A method for data processing is provided. The method comprises: grouping, by a first circuit configured to structure data fields, a first extracted column with a third extracted column; executing, by a scan circuit circuitry configured to evaluate column datasets, a hardware comparison between the grouped first and third columns; and generating result data associated with the hardware comparison, the result data comprising an address pointer defining a location associated with results of the hardware comparison and a length attribute corresponding to a source database page.

## Description

### FIELD

Aspects of some embodiments of the present disclosure relate to storage devices, systems and methods for data-analytics acceleration, for example, data-analytics acceleration in a storage device.

### BACKGROUND

In the field of computer storage, a system may include a host and one or more storage devices connected to (e.g., communicably coupled to) the host. Such computer storage systems have become increasingly popular, in part, for allowing many different users to share the computing resources of the system. Storage requirements have increased over time as the number of users of such systems and the number and complexity of applications running on such systems have increased.

The present background section is intended to provide context only, and the disclosure of any embodiment or concept in this section does not constitute an admission that said embodiment or concept is prior art.

### SUMMARY

Aspects of some embodiments of the present disclosure are directed to a data processing method and computer storage systems and devices that provide improvements to data acceleration (e.g., scan acceleration).

According to some embodiments of the present disclosure, there is provided a method for data processing, the method including receiving, by a first circuit, row data of a page, receiving, by the first circuit, first column data and second column data from the row data, and sending, by the first circuit, the first column data and the second column data to a first output port of the first circuit.

The sending may include performing time division multiplexing (TDM) on the first column data and the second column data.

The first circuit may include a column filter configured to receive the first column data and the second column data from the row data, and output the first column data and the second column data to a first data path based on TDM.

The first circuit may include a first memory configured to receive the first column data and the second column data from the first data path, store the first column data and the second column data in a buffer in a first order, and output the first column data and the second column data in a second order that is different from the first order.

The first memory may include random-access memory (RAM).

The first output port of the first circuit may be connected to a first input port of a scan circuit, and a second output port of the first circuit may be connected to a second input port of the scan circuit.

The first circuit may group the first column data with third column data output to the second output port.

The scan circuit may perform a scan operation including a comparison of the first column data with the third column data, and may output result data based on the scan operation.

The result data may include an address for locating results of the scan operation.

The result data may include a length associated with the page.

The scan circuit may perform a scan operation with respect to one or more columns of the row data.

According to some other embodiments of the present disclosure, there is provided a storage device including a first circuit to receive row data of a page, receive first column data and second column data from the row data, and send the first column data and the second column data to a first output port of the first circuit.

The sending may include time division multiplexing (TDM) the first column data and the second column data.

The first output port of the first circuit may be connected to a first input port of a scan circuit.

The scan circuit may perform a scan operation associated with the first input port of the scan circuit, and may output result data based on the scan operation.

The scan circuit may perform a scan operation with respect to one or more columns of the row data.

According to some other embodiments of the present disclosure, there is provided a system including a processor, and memory storing instructions, which, based on being executed by the processor, cause the processor to perform receiving row data of a page, extracting first column data and second column data from the row data, and sending the first column data and the second column data to a first output port of a first circuit.

The sending may include time division multiplexing (TDM) the first column data and the second column data.

The first output port of the first circuit may be connected to a first input port of a scan circuit.

The scan circuit may perform a scan operation associated with the first input port of the scan circuit, and may output result data based on the scan operation.

### BRIEF DESCRIPTION OF THE DRAWINGS

Non-limiting and non-exhaustive embodiments of the present disclosure are described with reference to the following figures, wherein like reference numerals refer to like parts throughout the various views unless otherwise specified.
FIG. 1 is a system diagram depicting a data-analytics accelerator, according to some embodiments of the present disclosure.
FIG. 2A is a diagram depicting an extracting-and-reordering circuit of the data-analytics accelerator, according to some embodiments of the present disclosure.
FIG. 2B is a diagram depicting a crossbar configuration associated with the extracting-and-reordering circuit, according to some embodiments of the present disclosure.
FIG. 3 is a diagram depicting operations of the extracting-and-reordering circuit and a scan-top circuit, according to some embodiments of the present disclosure.
FIG. 4 is a flowchart depicting example operations of a method for data processing for a data-analytics accelerator, according to some embodiments of the present disclosure.

Corresponding reference characters indicate corresponding components throughout the several views of the drawings. Skilled artisans will appreciate that elements in the figures are illustrated for simplicity and clarity, and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown to facilitate a less obstructed view of these various embodiments and to make the description clear.

### DETAILED DESCRIPTION

Aspects of the present disclosure and methods of accomplishing the same may be understood more readily by reference to the detailed description of one or more embodiments and the accompanying drawings. Hereinafter, embodiments will be described in more detail with reference to the accompanying drawings. The described embodiments, however, may be embodied in various different forms, and should not be construed as being limited to only the illustrated embodiments herein. Rather, these embodiments are provided as examples so that this disclosure will be thorough and complete, and will fully convey aspects of the present disclosure to those skilled in the art. Accordingly, description of processes, elements, and techniques that are not necessary to those having ordinary skill in the art for a complete understanding of the aspects and features of the present disclosure may be omitted.

Unless otherwise noted, like reference numerals, characters, or combinations thereof denote like elements throughout the attached drawings and the written description, and thus, descriptions thereof will not be repeated. Skilled artisans will appreciate that elements in the figures are illustrated for simplicity and clarity, and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown to facilitate a less obstructed view of these various embodiments and to make the description clear.

In the detailed description, for the purposes of explanation, numerous specific details are set forth to provide a thorough understanding of various embodiments. It is apparent, however, that various embodiments may be practiced without these specific details or with one or more equivalent arrangements.

It will be understood that, although the terms "zeroth," "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or component is referred to as being "on," "connected to," or "coupled to" another element or component, it can be directly on, connected to, or coupled to the other element or component, or one or more intervening elements or components may be present. However, "directly connected/directly coupled" refers to one component directly connecting or coupling another component without an intermediate component. Meanwhile, other expressions describing relationships between components such as "between," "immediately between" or "adjacent to" and "directly adjacent to" may be construed similarly. In addition, it will also be understood that when an element or component is referred to as being "between" two elements or components, it can be the only element or component between the two elements or components, or one or more intervening elements or components may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, each of the terms "or" and "and/or" includes any and all combinations of one or more of the associated listed items. For example, the expression "A and/or B" denotes A, B, or A and B.

For the purposes of this disclosure, expressions such as "at least one of," when preceding a list of elements, modify the entire list of elements and do not modify the individual elements of the list. For example, "at least one of X, Y, or Z," "at least one of X, Y, and Z," and "at least one selected from the group consisting of X, Y, and Z" may be construed as X only, Y only, Z only, or any combination of two or more of X, Y, and Z, such as, for instance, XYZ, XIYU, YZ, and ZZ.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

When one or more embodiments may be implemented differently, a specific process order may be performed differently from the described order. For example, two consecutively described processes may be performed substantially at the same time or performed in an order opposite to the described order.

Any of the components or any combination of the components described (e.g., in any system diagrams included herein) may be used to perform one or more of the operations of any flow chart included herein. Further, (i) the operations are merely examples, and may involve various additional operations not explicitly covered, and (ii) the temporal order of the operations may be varied.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Any of the functionalities described herein, including any of the functionalities that may be implemented with a host, a device, and/or the like or a combination thereof, may be implemented with hardware, software, firmware, or any combination thereof including, for example, hardware and/or software combinational logic, sequential logic, timers, counters, registers, state machines, volatile memories such as dynamic RAM (DRAM) and/or static RAM (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application-specific ICs (ASICs), central processing units (CPUs) including complex instruction set computer (CISC) processors and/or reduced instruction set computer (RISC) processors, graphics processing units (GPUs), neural processing units (NPUs), tensor processing units (TPUs), data processing units (DPUs), and/or the like, executing instructions stored in any type of memory. In some embodiments, one or more components may be implemented as a system-on-a- chip (SoC).

Any of the computational devices disclosed herein may be implemented in any form factor, such as 3.5 inch, 2.5 inch, 1.8 inch, M.2, Enterprise and Data Center Standard Form Factor (EDSFF), NF1, and/or the like, using any connector configuration such as Serial Advanced Technology Attachment (SATA), Small Computer System Interface (SCSI), Serial Attached SCSI (SAS), U.2, and/or the like. Any of the computational devices disclosed herein may be implemented entirely or partially with, and/or used in connection with, a server chassis, server rack, data room, data center, edge data center, mobile edge data center, and/or any combinations thereof.

Any of the devices disclosed herein that may be implemented as storage devices may be implemented with any type of nonvolatile storage media based on solid-state media, magnetic media, optical media, and/or the like. For example, in some embodiments, a storage device (e.g., a computational storage device) may be implemented as an SSD based on not-AND (NAND) flash memory, persistent memory such as cross-gridded nonvolatile memory, memory with bulk resistance change, PCM, and/or the like, or any combination thereof.

Any of the communication connections and/or communication interfaces disclosed herein may be implemented with one or more interconnects, one or more networks, a network of networks (e.g., the Internet), and/or the like, or a combination thereof, using any type of interface and/or protocol. Examples include Peripheral Component Interconnect Express (PCIe), non-volatile memory express (NVMe), NVMe-over-fabric (NVMe-oF), Ethernet, Transmission Control Protocol/Internet Protocol (TCP/IP), Direct Memory Access (DMA) Remote DMA (RDMA), RDMA over Converged Ethernet (ROCE), FibreChannel, InfiniBand, SATA, SCSI, SAS, Internet Wide Area RDMA Protocol (iWARP), and/or a coherent protocol, such as Compute Express Link (CXL), CXL.mem, CXL.cache, CXL.IO and/or the like, Gen-Z, Open Coherent Accelerator Processor Interface (OpenCAPI), Cache Coherent Interconnect for Accelerators (CCIX), and/or the like, Advanced eXtensible Interface (AXI), any generation of wireless network including 2G, 3G, 4G, 5G, 6G, and/or the like, any generation of Wi-Fi, Bluetooth, near-field communication (NFC), and/or the like, or any combination thereof.

In some embodiments, a software stack may include a communication layer that may implement one or more communication interfaces, protocols, and/or the like such as PCIe, NVMe, CXL, Ethernet, NVMe-oF, TCP/IP, and/or the like, to enable a host and/or an application running on the host to communicate with a computational device or a storage device.

Unless otherwise defined, all terms (including technical and scientific terms) used herein have the same meaning as commonly understood by one of ordinary skill in the art to which the present inventive concept belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As mentioned above, in the field of computer storage, a system may include a host and one or more storage devices communicably coupled to the host. The storage devices may include solid-state drives (SSDs). The storage devices may be configured to perform functions for applications running on the host. For example, the storage devices may be computational storage devices. As used herein, a "computational storage device" is a storage device that includes a processing circuit, that may be included in addition to a storage device controller, for performing functions near memory. The processing circuit may include a hardware logic circuit (e.g., an application specific integrated circuit (ASIC) or a field programable gate array (FPGA), and/or the like). The processing circuit may be configured to perform a function for the applications running on the host. For example, an application may send a request to perform a data-analytics operation (e.g., a scan operation) on data associated with a database page. A "database page" (also referred to as a "table"), as used herein, can include a data structure including rows (also referred to as "tuples") and columns associated with data fields in a data set. For example, the request to perform a scan operation may cause a storage device to compare data (e.g., column data) from one column of a database page with data from another column of the database page and output data associated with a result (e.g., a filtering result) of the comparison. The storage device may send data associated with the result to the host for further processing.

Aspects of some embodiments of the present disclosure provide a scan-operation architecture (e.g., a just-in-time scan operation architecture, to be discussed further below) to allow computer storage systems to scale to wider columns and wider database pages in database-analytics workloads. Aspects of some embodiments of the present disclosure may reduce some of the resource constraints (e.g., FPGA resource constraints) of fixed-parallel data path data-analytics architectures. In some embodiments, a software and hardware co-design solution may be used to allow for variable-length outputs from a filtering result.

In some embodiments, a memory-based (e.g., a RAM-based) architecture may be used to implement cross functionality (e.g., crossbar functionality) while reducing the consumption of hardware resources for performing scan operations.

In some embodiments, a hardware-produced pointer (e.g., an indirection pointer) may be provided for software to locate filtered scan-operation results of variable lengths by indexing into the identified location of the database page.

Accordingly, aspects of some embodiments of the present disclosure provide improvements to computational storage, including reducing the consumption of hardware resources while adding flexibility.

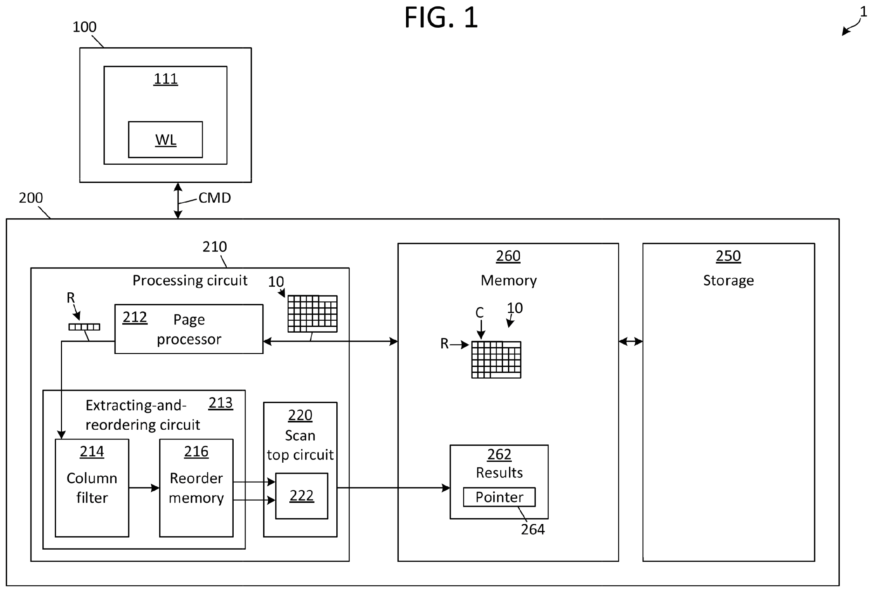

FIG. 1 is a system diagram depicting a data-analytics accelerator, according to some embodiments of the present disclosure.

Referring to FIG. 1, the system 1 may include a host 100 communicably coupled to a storage device 200 (e.g., a computational storage device). The host 100 may include an application 111. The application 111 may be associated with (e.g., may run on) a CPU of the host 100. The application may process a workload WL. Based on processing the workload WL, the application 111 may send a command CMD (e.g., a scan command) to the storage device 200 to cause the storage device 200 to perform a scan operation associated with the workload WL. The storage device 200 may include a storage 250, a memory 260, and a processing circuit 210. The storage 250 may include a non-volatile memory (e.g., a non-volatile memory express (NVMe) SSD). The memory 260 may include a volatile memory (e.g., a dynamic random-access memory (DRAM)). The memory 260 may be used by the storage device 200, at least in part, for performing computations on data stored in the storage 250. Accordingly, the memory 260 may be referred to as a computational memory. For example, data may be moved from the storage 250 to memory 260, such that the processing circuit may perform operations on the data in relation to the memory 260. For example, the storage device 200 may copy a database page 10 from the storage 250 to the memory 260 for processing the command CMD. The database page 10 may include column data C corresponding to respective columns of the database page 10. The database page 10 may include row data R corresponding to respective rows of the database page 10. The rows of the database page 10 may also be referred to as "tuples."

The processing circuit 210 may include a page processor 212, an extracting-and-reordering circuit 213, and a scan-top circuit 220 (e.g., a scan circuit). As used herein, a "scan-top circuit" refers to a component that is associated with (e.g., that is a component of) the processing circuit 210 and that includes scan-related components. The page processor 212 may receive the database page 10 from the memory 260. The page processor 212 may extract row data R from the database page 10. In some embodiments, the page processor 212 may extract row data R from the database page 10 in a row-by-row (also referred to as a "tuple-by-tuple") format.

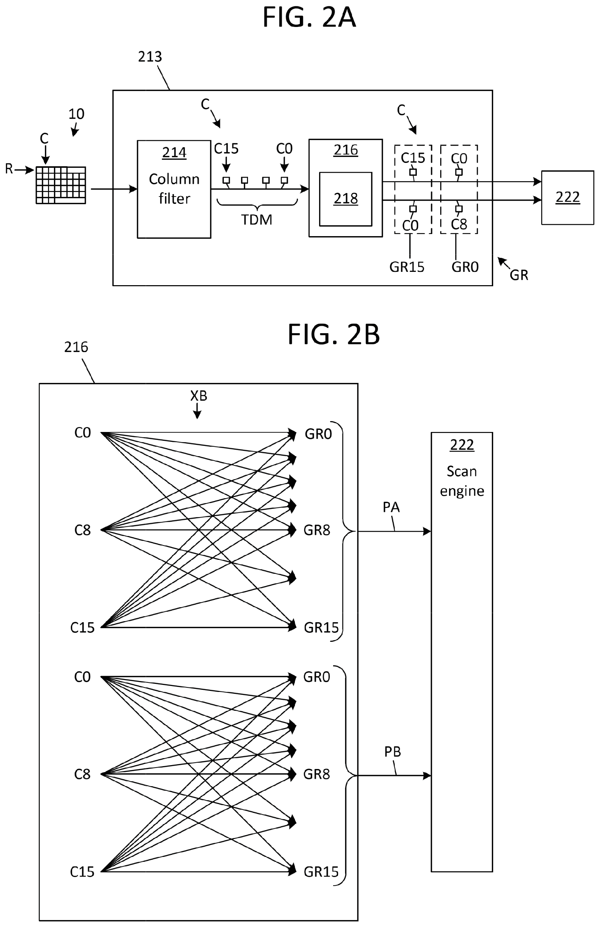

The row data R may be processed further by the extracting-and-reordering circuit 213. The extracting-and-reordering circuit 213 may process the row data R using multiplexing (e.g., time-division multiplexing (TDM)). As used herein, "time-division multiplexing" refers to a technique for transmitting data belonging to different columns over the same physical signal path (e.g., the same physical data line/wire or differential pair wire) over separate time intervals. The extracting-and-reordering circuit 213 may add flexibility to the processing of the row data R. The extracting-and-reordering circuit 213 may include a column filter 214 and a reorder memory 216. The column filter 214 may receive the row data R from the page processor 212. The column filter 214 may find column boundaries within the row data R and may provide column data C to the scan-top circuit 220 by way of the reorder memory 216. The functions of the components of the extracting-and-reordering circuit 213 are discussed in further detail below with respect to FIGS. 2A-4.

The scan-top circuit 220 may include one or more scan engines 222 (e.g., scan engine circuits). The output of the scan-top circuit 220 may provide results 262 associated with the command CMD. The processing circuit 210 may save the results 262 to the memory 260. The results of the scan operation may be retrieved and sent to the host 100 based on the results 262. In some embodiments, the results 262 may include a pointer 264 (e.g., an indirection pointer). The pointer 264 may refer to an address and a length of data associated with the database page 10. In such embodiments, the results of the scan operation may be sent to the host 100 based on the data to which the pointer 264 refers. By using the pointer 264, the storage device 200 may be able to provide variable-length outputs. For example, in some embodiments, the output of the scan-top circuit 220 may be limited to a given size (e.g., an 8-byte (B) format). The given size provided for the output of the scan-top circuit 220 may be too small to provide the scan-operation results associated with the row data R when the row data R is relatively long (e.g., when a corresponding database page is relatively wide). The size of the pointer 264, however, may be sufficiently small, regardless of the size of the data to which it points. For example, the pointer 264 may include an address and a length of a given result, both of which may be encoded within a format having the given size (e.g., encoded within an 8 B format).

FIG. 2A is a diagram depicting an extracting-and-reordering circuit of the data-analytics accelerator, according to some embodiments of the present disclosure.

FIG. 2B is a diagram depicting a crossbar configuration associated with the extracting-and-reordering circuit, according to some embodiments of the present disclosure.

Referring to FIG. 2A, aspects of some embodiments of the present disclosure provide flexibility for processing column data C, associated with different row sizes, by way of the extracting-and-reordering circuit 213. As discussed above, the extracting-and-reordering circuit 213 may include the column filter 214 and the reorder memory 216. In some embodiments, the reorder memory may include RAM. The column filter 214 may receive the row data R and extract column data from a particular row. For example, the column filter may receive one row including 16 columns. The 16 columns may include zeroth column data C0 associated with a zeroth column of the 16 columns. The 16 columns may also include a fifteenth column data C15 associated with a fifteenth column (e.g., an n-1-th column out of n columns, wherein n is a positive integer) of the 16 columns. The column filter 214 may multiplex (e.g., time multiplex) the column data C (e.g., using TDM) onto a data path (e.g., a single data line/wire or differential pair wire) connecting the column filter 214 to the reorder memory 216. The reorder memory 216 may receive the column data C and store the column data C in a first order (e.g., the order in which the column data C is received) in the buffer 218. The reorder memory 216 may provide the column data C to output ports of the extracting-and-reordering circuit 213 in a second order that is different that the first order. The output ports of the extracting-and-reordering circuit 213 may be connected to respective input ports of the scan engine 222. The extracting-and-reordering circuit 213 may output the column data C to the scan engine 222 in groupings GR (e.g., a zeroth grouping GR0 and a fifteenth grouping GR15).

Referring to FIG. 2B, the reorder memory 216 may provide a store-and-forward crossbar implementation mechanism. For example, the reorder memory 216 may output the column data C in the second order based on a crossbar configuration XB (e.g., a RAM-based crossbar configuration). A crossbar refers to a component that has dedicated signal paths from any input port to any output port. As used herein, a "crossbar configuration," refers to a configuration of hardware and/or software components that enable a component to send different input combinations to any output ports for further processing by another component. In some embodiments, the reorder memory 216 may provide the column data C to a first input port PA and a second input port PB in groupings GR based on the crossbar configuration XB. For example, a zeroth grouping GR0 may include zeroth column data C0 from a zeroth column and eighth column data C8 from an eighth column. In accordance with the crossbar configuration XB, and based on the command CMD, the reorder memory 216 may output the zeroth column data C0 to a first output port of the extracting-and-reordering circuit 213 and may output the eighth column data C8 to a second output port of the extracting-and-reordering circuit 213. The first output port of the extracting-and-reordering circuit 213 may be connected to a first input port PA of the scan engine 222. The second output port of the extracting-and-reordering circuit 213 may be connected to a second input port PB of the scan engine 222. Although the present disclosure discusses two input ports to the scan engine 222, it should be understood that the present disclosure is not limited thereto. For example, the scan engine 222 may have any number of input ports, and the groupings GR may include sets of column data corresponding to the number of input ports.

The reorder memory 216 may provide a more efficient grouping of column data C for a scan operation than a fixed-column crossbar structure. For example, the reorder memory 216 may allow the scan engine 222 to process wider rows (e.g., rows with more columns). The reorder memory 216 may allow the scan engine 222 to more efficiently process rows having different widths.

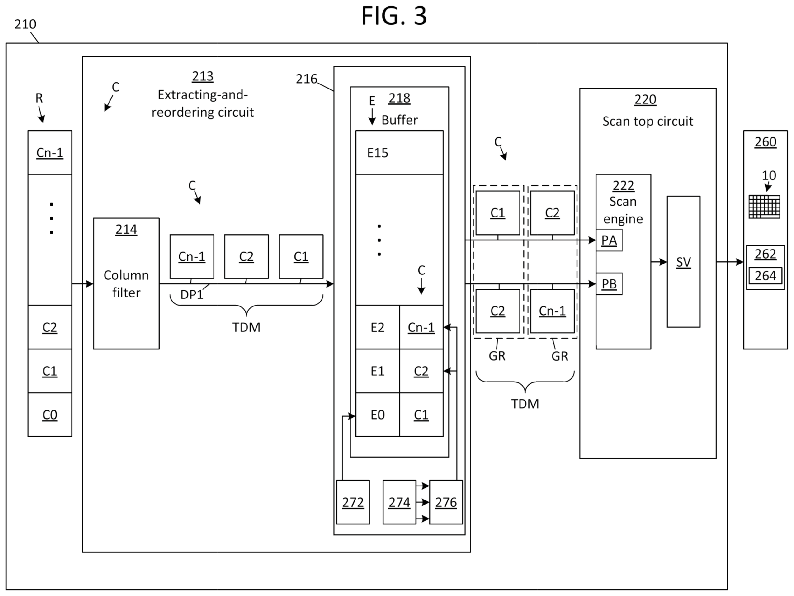

FIG. 3 is a diagram depicting operations of the extracting-and-reordering circuit and a scan-top circuit, according to some embodiments of the present disclosure.

As discussed above with respect to FIG. 1, the processing circuit 210 may include the extracting-and-reordering circuit 213 and the scan-top circuit 220. The extracting-and-reordering circuit 213 may include the column filter 214 and the reorder memory 216. The scan-top circuit 220 may include the scan engine 222. The scan-top circuit 220 may include additional components for processing the output of the scan engine 222. The column filter 214 may extract column data C from given row data R (e.g., may extract column data C respectively corresponding to each column of a given row).

In some embodiments, the column filter 214 may transfer one column at a time to the reorder memory 216. For example, for a given row, the column filter may send data associated with each column in a given row as the data is extracted and without waiting for all of the column data associated with the given row to be extracted. Accordingly, the architecture of the processing circuit 210 may be referred to as a "just-in-time" stream architecture. In some embodiments, the column filter 214 may transfer one column at a time using TDM. TDM allows for the use of only one scan engine where a fixed parallel-path approach would require more than one scan engine. For example, instead of the column filter 214 extracting all of the column data C from the row data R and transferring all of the column data C to the reorder memory 216 together via separate parallel data paths, the column filter 214 may transfer data associated with each column of a row to the reorder memory 216 after (e.g., immediately after or as) the corresponding column data C is extracted from the row data R. Accordingly, the processing circuit 210 may perform scan operations on wider rows while using fewer resources than with a fixed parallel-path approach.

In some embodiments, column data C may be stored at entries E of the buffer 218 of the reorder memory 216. In some embodiments, the column data C may be stored in the buffer 218 based on an order in which the column data C is extracted. For example, the column filter 214 may extract first column data C1 from the row data R. The column filter 214 may send the first column data C1 to the reorder memory 216 via a first data path DP1 (e.g., using TDM). The reorder memory 216 may store the first column data C1 at a zeroth entry E0 of the reorder memory 216. The column filter 214 may extract second column data C2 from the row data R. The column filter 214 may send the second column data C2 to the reorder memory 216 via the first data path DP1 (e.g., using TDM). The reorder memory 216 may store the second column data C2 at a first entry E1 of the reorder memory 216. The column filter 214 may extract n-1-th column data Cn-1 from the row data R. The column filter 214 may send the n-1-th column data Cn-1 to the reorder memory 216 via the first data path DP1 (e.g., using TDM). The reorder memory 216 may store the n-1-th column data Cn-1 at a second entry E2 of the reorder memory 216.

In some embodiments, the reorder memory 216 may include a buffer-write controller 272, configuration registers 274, and/or a buffer-read controller 276. The buffer-write controller 272 may write the extracted column data from the column filter 214 to the buffer 218 in order (e.g., according to a predefined order). In some embodiments, the first extracted (e.g., filtered) column data C may be saved to the buffer 218 at the zeroth entry E, and subsequent extracted column data C may be placed in the next entry in increments of one (e.g., E1, E2, E3, etc.). In some embodiments, the configuration registers 274 may be used to select the inputs for each scan operation based on a crossbar configuration. For example, a first scan operation may include a comparison of the second column data C2 at the first input port PA with the n-1-th column data Cn-1 at the second input port PB. A second scan operation may include a comparison of the first column data C1 at the first input port PA with the second column data C2 at the second input port PB. The buffer-read controller 276 may retrieve the column data C from the buffer 218 in the order provided by the configuration registers 274. The buffer-read controller 276 may cause the column data C to be received by the scan engine 222 according to the crossbar configuration and based on TDM. The reorder memory 216 may send the column data C to the scan engine 222 in groupings GR based on the crossbar configuration, as discussed above with respect to FIG. 2B. The scan engine 222 may receive the column data from the reorder memory 216 according to the crossbar configuration and based on TDM. Accordingly, the extracting-and-reordering circuit 213 may provide a pair-wise time-division output.

In some embodiments, the output of the scan engine 222 may be saved to a scan vector SV. For example, the output of the scan engine 222 may be accumulated as it is generated by the scan engine 222 and saved to the scan vector SV. The scan-top circuit 220 may provide the results 262 (e.g., data associated with the output of the scan engine 222) to the memory 260. For example, the output of the scan engine 222 may be processed further to generate the results 262. The scan-top circuit 220 may send the results 262 to the memory 260.

In some embodiments, the results 262 may include the pointer 264 (e.g., the indirection pointer) instead of computational results of the scan operations. By providing the pointer 264, instead of the computational results, the processing circuit 210 may perform scan operations on wider rows having different widths. The pointer 264 may include an address and a length. The address and the length may indicate where the computational results from the scan operations may be found. In some embodiments, the address and length provided by the pointer 264 may correspond to the database page 10 saved in the memory 260. The hardware of the processing circuit 210 may generate scan operation results efficiently while software is used to handle post-processing operations more flexibly, such as by retrieving the results of the scan operation by referencing the address and length provided by the pointer 264. Accordingly, storage devices of such embodiments may combine both software and hardware components to support variable length outputs with indirection.

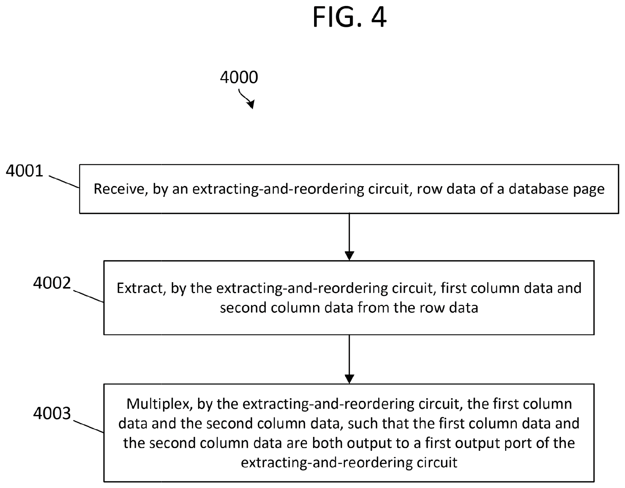

FIG. 4 is a flowchart depicting example operations of a method for data processing for a data-analytics accelerator, according to some embodiments of the present disclosure.

Referring to FIG. 4, the method 4000 may include the following example operations. An extracting-and-reordering circuit 213 (e.g., a first circuit) may receive row data R of a database page 10 (e.g., a page) (operation 4001). The extracting-and-reordering circuit 213 may extract first column data C and second column data C from the row data R (operation 4002). The extracting-and-reordering circuit 213 may multiplex (e.g., send using TDM) the first column data C and the second column data C, such that the first column data C and the second column data C are both output (e.g., sent or provided) to a first output port of the extracting-and-reordering circuit 213 (operation 4003).

Accordingly, aspects of some embodiments of the present disclosure may provide improvements to computer storage by allowing computational storage devices to perform data grouping operations using fewer scan engines without performance loss; allowing scan engines to perform scan operations on wider database pages (e.g., database pages having more columns); and allowing systems to process variable-length outputs from the wider database pages having rows of different sizes. Thus, aspects of some embodiments of the present disclosure provide for more efficient processing of database pages.

Example embodiments of the disclosure may extend to the following statements, without limitation:
Statement 1. An example method includes: receiving, by a first circuit, row data of a page, receiving, by the first circuit, first column data and second column data from the row data, and sending, by the first circuit, the first column data and the second column data to a first output port of the first circuit.
Statement 2. An example method includes the method of statement 1, wherein the sending includes performing time division multiplexing (TDM) on the first column data and the second column data.
Statement 3. An example method includes the method of any of statements 1 and 2, wherein the first circuit includes a column filter configured to receive the first column data and the second column data from the row data, and output the first column data and the second column data to a first data path based on TDM.
Statement 4. An example method includes the method of any of statements 1-3, wherein the first circuit includes a first memory configured to receive the first column data and the second column data from the first data path, store the first column data and the second column data in a buffer in a first order, and output the first column data and the second column data in a second order that is different from the first order.
Statement 5. An example method includes the method of statement 4, wherein the first memory includes random-access memory (RAM).
Statement 6. An example method includes the method of any of statements 1-5, wherein the first output port of the first circuit is connected to a first input port of a scan circuit, and a second output port of the first circuit is connected to a second input port of the scan circuit.
Statement 7. An example method includes the method of any of statements 1-6, wherein the first circuit groups the first column data with third column data output to the second output port.
Statement 8. An example method includes the method of statement 7, wherein the scan circuit performs a scan operation including a comparison of the first column data with the third column data, and outputs result data based on the scan operation.
Statement 9. An example method includes the method of statement 8, wherein the result data includes an address for locating results of the scan operation.
Statement 10. An example method includes the method of any of statements 8 and 9, wherein the result data includes a length associated with the page.
Statement 11. An example method includes the method of any of statements 6-11, wherein the scan circuit performs a scan operation with respect to one or more columns of the row data.
Statement 12. An example device for performing the method of any of statements 1-11 includes the first circuit.
Statement 13. An example system for performing the method of any of statements 1-11 includes a processor, and memory storing instructions, which, based on being executed by the processor, cause the processor to perform the method of any of statements 1-11.

While embodiments of the present disclosure have been particularly shown and described with reference to the embodiments described herein, it will be understood by those of ordinary skill in the art that various changes in form and details may be made therein without departing from the scope of the claims.

## Claims

1. A method for data processing, the method comprising:
grouping, by a first circuit configured to structure data fields, a first extracted column with a third extracted column;
executing, by a scan circuit circuitry configured to evaluate column datasets, a hardware comparison between the grouped first and third columns; and
generating result data associated with the hardware comparison, the result data comprising an address pointer defining a location associated with results of the hardware comparison and a length attribute corresponding to a source database page.

2. The method of claim 1, for data processing, the method comprising:
receiving, by the first circuit, row data of the source database page;
receiving, by the first circuit, data of the first column and data of a second column from the row data; and
sending, by the first circuit, the data of the first column and the data of the second column to a first output port of the first circuit.

3. The method of claim 2, wherein the sending comprises performing time division multiplexing, TDM, on the data of the first column and the data of the second column.

4. The method of claim 2 or 3, wherein the first circuit comprises a column filter configured to:
receive the data of the first column and the data of the second column from the row data; and
output the data of the first column and the data of the second column to a first data path based on TDM.

5. The method of claim 4, wherein the first circuit comprises a first memory configured to:
receive the data of the first column and the data of the second column from the first data path;
store the data of the first column and the data of the second column in a buffer in a first order; and
output the data of the first column and the data of the second column in a second order that is different from the first order.

6. The method of claim 5, wherein the first memory comprises random-access memory, RAM.

7. The method of any one of claims 2 to 6, wherein:
the first output port of the first circuit is connected to a first input port of the scan circuit; and
a second output port of the first circuit is connected to a second input port of the scan circuit.

8. The method of claim 7, wherein data of the third column is output to the second output port.

9. The method of any one of claims 1 to 8, wherein the scan circuit performs a scan operation with respect to one or more columns of the row data.

10. The method of any one of claims 1 to 6, wherein the first output port of the first circuit is connected to a first input port of a scan circuit.

11. The method of claim 10, wherein the scan circuit:
performs a scan operation associated with the first input port of the scan circuit; and
outputs the result data based on the scan operation.

12. A storage device comprising circuit configured to perform the method according to any one of claims 1 to 11.
